# EUROPÄISCHE PATENTANMELDUNG

(11) **EP 2 478 973 A2**
(43) Veröffentlichungstag der Anmeldung: **25.07.2012**
(21) Anmeldenummer: 11191267.1
(22) Anmeldetag: 30.11.2011
(51) Int. Cl.: B08B 9/08, B08B 9/093, B60P 3/22

(54) **Vorrichtung und Verfahren zur Reinigung eines an einem Transportfahrzeug angebrachten Tanks**

(30) Priorität: 21.01.2011 DE 102011000266
(71) Anmelder: HD kunststoffe & Kunststofferzeugnisse GmbH, 51399 Burscheid (DE)
(72) Erfinder: Derenowski, Heinrich, 42799 Leichlingen (DE)
(74) Vertreter: Fleck, Hermann-Josef

(57) **Zusammenfassung**

Die Erfindung betrifft eine Vorrichtung zur Reinigung eines an einem Transportfahrzeug (10,10a,10b) angebrachten Tanks (12), wobei der Tank (12) von einer Transportstellung in eine dazu geneigte Reinigungsstellung gebracht werden kann. An dem Transportfahrzeug (10,10a,10b) ist ein Vorratsbehälter (14) für Reinigungswasser angeordnet. An dem in Reinigungsstellung oberen Ende (12a) des Tanks (12) ist eine Einrichtung (16) zur Verteilung von Reinigungswasser an der Innenwandung des Tanks (12) angeordnet ist. Der Reinigungswasser-Vorratsbehälter (14) und die Verteilungseinrichtung (16) sind über eine Leitung (18) miteinander verbunden. Zwischen dem Reinigungswasser-Vorratsbehälter (14) und der Verteilungseinrichtung (16) ist eine Fördereinrichtung (20) wirksam, mit der das Reinigungswasser zur Verteilungseinrichtung (16) gefördert wird. An dem in Reinigungsstellung unteren Ende des Tanks (12) ist eine Auffangeinrichtung (22) für das anfallende Schmutzwasser angeordnet.

Weiterhin betrifft die Erfindung ein Verfahren zur Reinigung eines an einem Transportfahrzeug (10,10a,10b) angebrachten Tanks (12).

## Beschreibung

Die Erfindung betrifft eine Vorrichtung und ein Verfahren zur Reinigung eines an einem Transportfahrzeug angebrachten Tanks, insbesondere eines mit einem granularen Transportgut befüllbaren Silotanks, wobei der Tank von einer Transportstellung in eine dazu geneigte Reinigungsstellung gebracht werden kann.

Aus dem Stand der Technik ist beispielsweise bekannt, dass granulares Transportgut in so genannten Silofahrzeugen transportiert wird. Silofahrzeuge sind Transportfahrzeuge, die beispielsweise aus einem Lastkraftwagen als Zugmaschine und einem Auflieger bestehen, an dem ein Silotank zur Aufnahme des Granulats montiert ist. Auch können die Silotanks auf Anhängern oder Lastkraftwagen montiert sein. Die Silotanks sind in Transportstellung im Wesentlichen waagrecht ausgerichtet, können jedoch zu Entlade- oder Reinigungszwecken in eine im Wesentlichen senkrechte Position gebracht werden. Dies erfolgt in der Regel durch eine an dem Transportfahrzeug angebrachte hydraulische oder pneumatische Aktuatorik. Außer Granulaten lassen sich grundsätzlich auch Flüssigkeiten in Silotanks transportieren.

Nach dem Entladen des granularen Transportguts müssen die Silotanks gereinigt werden. Grund hierfür ist, eine mögliche Kontaminierung der Anschlussbefüllung mit dem Füllgut der Erstbeladung zu verhindern. Herkömmlicherweise wird die der Entladung folgende Reinigung in dafür speziell anzufahrenden Reinigungsanlagen durchgeführt.

In einer derartigen Reinigungsanlage wird die Reinigung in folgenden Schritten durchgeführt: Zuerst wird der zu reinigende Tank in eine senkrechte Reinigungsposition gebracht. Durch eine am unteren Ende des Silotanks befindliche Öffnung wird mittels einer Reinigungslanze die Innenseite des Silotankes mit durch ein HochdruckReinigungsgerät eingebrachtem Wasser gereinigt. Das anfallende mit Granulatteilen verunreinigte Wasser wird gegebenenfalls aufbereitet und entsorgt. Anschließend wird der Innenraum des Tankes mittels Heißluft getrocknet. Abschließend wird nach dem Absenken des Silotankes die Reinigungsöffnung wieder geschlossen. Das Fahrzeug ist erneut einsatzbereit. Die Durchführung der Reinigung wird abschließend zum Nachweis der durchgeführten Reinigung durch Übergabe eines Zertifikates dokumentiert.

Alle bei der Reinigung anfallenden Arbeitsschritte werden von speziell hierfür ausgebildetem Personal mit entsprechender Schutzausrüstung durchgeführt.

Diese Art der Silotankreinigung ist teuer, zumal die speziellen Reinigungsanlagen angefahren werden müssen, die Transportfahrzeuge dabei erhebliche Standzeiten haben und die Durchführung der Reinigung selbst sehr kostenintensiv ist.

Es ist nun Aufgabe der Erfindung, eine Vorrichtung und ein Verfahren zur Reinigung eines an einem Transportfahrzeug angebrachten Tanks anzugeben, die bzw. das es ermöglicht, dass der Fahrer des Transportfahrzeuges die Tankreinigung selbst durchführen kann, ohne dass eine Tankwaschanlage angefahren werden muss.

Diese Aufgabe der Erfindung wird einerseits durch eine Vorrichtung zur Reinigung eines an einem Transportfahrzeug angebrachten Tanks gemäß den Merkmalen des Patentanspruchs 1 und andererseits durch ein Reinigungsverfahren gemäß den Merkmalen des Patentanspruchs 11 gelöst. Vorteilhafte Weiterbildungen sind jeweils in den Unteransprüchen beschrieben.

Gemäß einem Grundgedenken der Erfindung ist bei der Reinigungsvorrichtung an dem Transportfahrzeug ein Vorratsbehälter für Reinigungswasser angeordnet. Das für die Reinigung benötigte Reinigungswasser wird also auf dem Transportfahrzeug mitgeführt und steht für Reinigungszwecke stets zur Verfügung. Eine externe Wasserversorgung ist für den Reinigungsvorgang selbst nicht notwendig.

Der Vorratsbehälter kann dabei so aufgebaut sein und sich am Transportfahrzeug so unterbringen lassen, dass er leicht einzubauen ist, wobei die Anschlussleitungen leicht zugänglich sind. Es können bei der Installation des Behälters handelsübliche Anschlussteile verwendet werden.

An dem in Reinigungsstellung oberen Bereich des Tanks ist eine Einrichtung zur Verteilung von Reinigungswasser an der Innenwandung des Tanks angeordnet. Der Reinigungswasser-Vorratsbehälter und die Verteilungseinrichtung sind über eine Leitung miteinander verbunden, wobei zwischen dem Reinigungswasser-Vorratsbehälter und der Verteilungseinrichtung eine Fördereinrichtung wirksam ist, mit der das Reinigungswasser zur Verteilungseinrichtung gefördert wird. Der Fahrer des Transportfahrzeuges muss somit keine Reinigungslanze in den Tankinnenraum einführen, um mittels eines externen Hochdruck-Reinigers den Tank auszuspülen. Vielmehr übernimmt die Verteilungseinrichtung zusammen mit der Fördereinrichtung diese Aufgabe ohne wesentliches Zutun durch externes Personal.

An dem in Reinigungsstellung unteren Bereich des Tanks ist eine Auffangeinrichtung für das anfallende Schmutzwasser angeordnet. Das anfallende mit Granulat verunreinigte Waschwasser kann auf einfache Weise aufbereitet werden, indem beispielsweise das Abfallgranulat separiert und von dem Waschwasser getrennt entsorgt wird.

Die erfindungsgemäße Reinigungsvorrichtung lässt sich komplett mit allen für den Reinigungsprozess notwendigen Gerätschaften im Transportfahrzeug integriert mitführen. Dabei kann die Reinigung des Tanks ohne externe Reinigungsmittel- und Energieversorgung vom Fahrer selbst durchgeführt werden. Die Reinigungsvorrichtung funktioniert autark.

Die Auffangeinrichtung kann über eine Leitung mit einem an dem Transportfahrzeug angeordneten Sammelbehälter verbunden sein, wobei in der Leitung eine Filtereinrichtung zur Reinigung des anfallenden Schmutzwassers von Granulatteilen angeordnet ist. Die im Filter anfallenden Granulatteile können leicht entnommen und entsorgt werden. Das gefilterte Waschwasser wird im Sammelbehälter aufgefangen und kann zu einem späteren Zeitpunkt an geeignetem Ort entsorgt werden. Alternativ oder zusätzlich kann je nach Verschmutzung des Waschwassers dieses auch wieder für einen weiteren Reinigungsvorgang eingesetzt werden.

Gemäß einer vorteilhaften Weiterbildung kann zumindest an dem Reinigungswasser-Vorratsbehälter eine Heizeinrichtung zur Erwärmung des Reinigungswassers angeordnet sein. Zum einen verhindert die Heizeinrichtung im Winterbetrieb ein Einfrieren des Reinigungswassers im Vorratsbehälter. Zum anderen steht für den Reinigungsvorgang erhitztes Wasser zur Verfügung, welches im Silotank eine bessere Reinigungswirkung entfaltet als kaltes Wasser.

Auch an dem Sammelbehälter für das anfallende Schmutzwasser kann eine Heizeinrichtung zur Erwärmung des Schmutzwassers angeordnet sein. Die Heizeinrichtung verhindert im Winterbetrieb ein Einfrieren des Schmutzwassers im Sammelbehälter.

Gemäß einer bevorzugten Ausführungsform kann an dem Motor des Transportfahrzeugs ein erster Wärmetauscher zur Übertragung der Motorwärme an von der Druckluftanlage des Transportfahrzeugs erzeugte Druckluft angeordnet sein. Zwischen dem ersten Wärmetauscher und der Heizeinrichtung kann dabei eine Druckluftleitung angeordnet sein, über welche die am ersten Wärmetauscher erwärmte Druckluft zu einem an der Heizeinrichtung angeordneten weiteren Wärmetauscher transportiert wird. An diesem weiteren Wärmetauscher wird die Wärme der Druckluft an das Reinigungswasser und/oder an das Schutzwasser übertragen. Mit dieser Anordnung kann auf einfache Weise die ohnehin abzuführende Motorwärme zum Erhitzen des Reinigungswassers und/oder des Schutzwassers verwendet werden.

Alternativ oder zusätzlich kann die Heizeinrichtung auch elektrisch betrieben werden. Hierzu ist die Heizeinrichtung mit der Stromversorgung des Transportfahrzeugs verbunden.

In vorteilhafter Ausgestaltung kann die Heizeinrichtung eine Temperaturbegrenzungsschaltung aufweisen, die bei Erreichen einer vorgegebenen Wassertemperatur eine weitere Wärmezufuhr unterbricht. Dabei kann die Temperaturbegrenzungsschaltung bei druckluftbetriebener Heizeinrichtung so ausgeführt sein, dass sie die Druckluftzufuhr unterbricht. Bei elektrischer Heizeinrichtung kann die Temperaturbegrenzungsschaltung so ausgeführt sein, dass sie die Stromzufuhr unterbricht bzw. abschaltet.

Gemäß einer bevorzugten Ausführungsform kann die Fördereinrichtung druckluftbetrieben sein. Alternativ oder zusätzlich kann jedoch auch eine Pumpeinrichtung vorgesehen sein, die das Reinigungswasser aus dem Reinigungswasser-Vorratsbehälter zur Verteilungseinrichtung fördert. Die Pumpeinrichtung kann dabei elektrisch betrieben oder druckluftbetrieben sein.

Gemäß einer weiteren bevorzugten Ausführungsform kann zwischen dem ersten Wärmetauscher und der Verteilungseinrichtung eine Druckluftleitung angeordnet sein, über welche die am ersten Wärmetauscher durch die Motorwärme erwärmte Druckluft zur Trocknung in den Innenraum des Tanks geleitet wird. Dabei kann die Druckluft direkt zur Verteilungseinrichtung geleitet werden. Indem in einem Reinigungsschritt das Reinigungswasser und in einem späteren Reinigungsschritt die für die Trocknung verwendete Druckluft durch denselben Leitungsstrang geleitet wird, wird dieser Leitungsstrang trocken geblasen, so dass Korrosion und im Winter ein Einfrieren wirkungsvoll verhindert wird.

Gemäß dem erfindungsgemäßen Reinigungsverfahren wird die Innenwandung des in die geneigte Reinigungsstellung gebrachten Tanks zumindest an seinem oberen Bereich mit Reinigungswasser benetzt. Dabei läuft das Reinigungswasser unter Schwerkrafteinfluss an der Innenwandung des Tanks herab und die Verschmutzungen, insbesondere durch Granulatteile, werden von der Innenwandung abgespült. Das anfallende Schmutzwasser wird an dem in Reinigungsstellung unteren Bereich des Tanks aus diesem ausgespült.

Vorteilhafterweise wird durch die Druckluftanlage des Transportfahrzeugs Druckluft erzeugt. Die Wärme des Motors des Transportfahrzeugs kann an die Druckluft übertragen werden und das Reinigungswasser vor dem Einbringen in den Tank mit der erwärmten Druckluft erhitzt werden. Nach dem Ausspülen des Tanks mit Reinigungswasser kann die erwärmte Druckluft zur Trocknung in den Tank eingeblasen werden.

Die Erfindung wird nachfolgend anhand in den Zeichnungen dargestellter Ausführungsbeispiele näher erläutert.

Es zeigen:
- Figur 1: in schematischer und perspektivischer Ansicht den Aufbau eines Nutzfahrzeug-Aufliegers mit einem Silotank, der in eine zwischen Transportposition und Reinigungsposition geneigte Position gebracht ist;
- Figur 2: in schematischer Ansicht einen stark vereinfachten Schaltplan einer pneumatisch betriebenen und pneumatisch beheizten Reinigungsvorrichtung; und
- Figur 3: in schematischer Ansicht einen stark vereinfachten Schaltplan einer pneumatisch betriebenen und elektrisch beheizten Reinigungsvorrichtung.

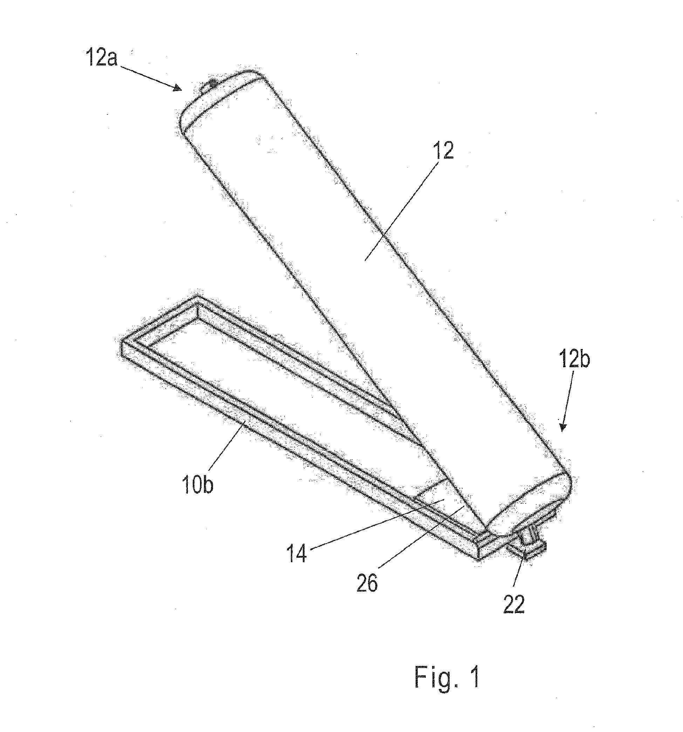

Die Figur 1 zeigt in schematischer und perspektivischer Ansicht den Aufbau eines Nutzfahrzeug-Aufliegers 10b, der einen mit einem granularen Transportgut befüllbaren Silotank 12 trägt. Der Silotank 12 ist in der Ansicht der Figur 1 in eine zwischen Transportposition und Reinigungsposition geneigte Position gebracht. Die zum Verschwenken des Silotanks 12 verwendete Aktuatorik ist nicht dargestellt. Diese kann hydraulisch oder pneumatisch betrieben werden. An dem Auflieger 10b ist ein Behälter angebracht, der integriert einen Vorratsbehälter 14 für Reinigungswasser und einen Sammelbehälter 26 für Schmutzwasser aufweist.

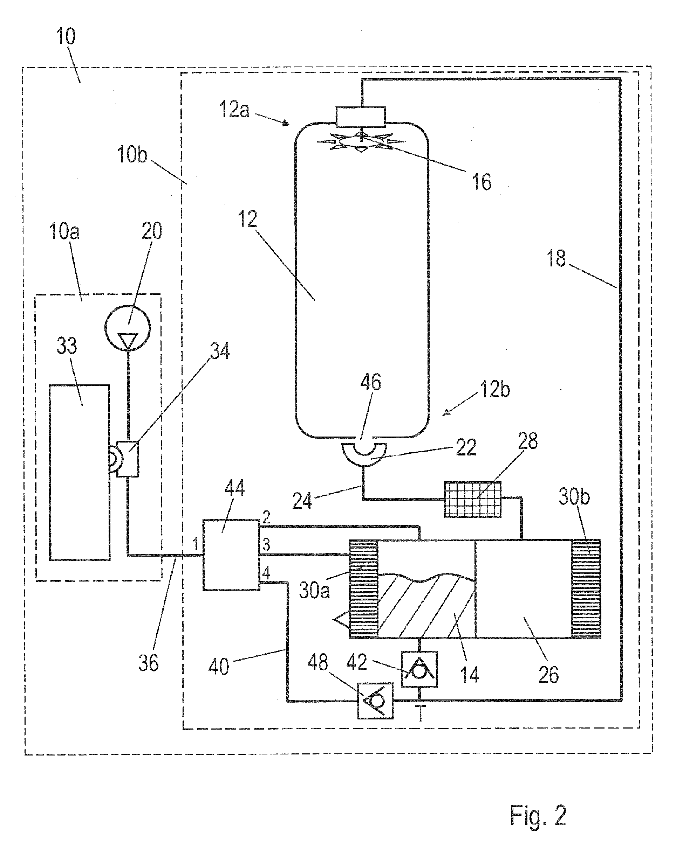

Die Figur 2 zeigt in schematischer Ansicht einen stark vereinfachten Schaltplan einer pneumatisch betriebenen und pneumatisch beheizten Reinigungsvorrichtung.

Ein Zugfahrzeug 10a ist mit einem Auflieger 10b verbunden, die zusammen das Transportfahrzeug 10 bilden. Auf dem Auflieger 10b sind die wesentlichen Komponenten der Reinigungsvorrichtung und der Silotank montiert.

Der Tank 12 ist in eine im Wesentlichen senkrechte Reinigungsstellung gebracht. An dem Auflieger 10b ist ein Vorratsbehälter 14 für Reinigungswasser angeordnet. Von dem Vorratsbehälter 14 führt unterseitig über ein Rückschlagventil 42 eine Druckleitung 18 am oberen Bereich 12a des Tanks 12 zu einem Rotor 16, der rotierende Düsen aufweist, aus denen das Reinigungswasser an der Innenwandung des Tanks 12 umlaufend verteilt wird. Der Rotor 16 ist an einer in der Reinigungsstellung möglichst hohen Position angeordnet und weist Einwegventile auf. Der Rotor 16 arbeitet nach Art eines bekannten beispielsweise in einer Geschirrspülmaschine verwendeten Rotors, der innen liegende Wasserführungskanäle aufweist, die in Spritzdüsen an den Rotorflügeln enden. Die Spritzdüsen sind dabei so ausgerichtet, dass sich der Rotor durch den Wasserdruck selbsttätig dreht. Zudem sind die Spritzdüsen nicht nur in radialer Ebene ausgerichtet, sondern sind teilweise auch nach oben ausgerichtet, um den oberen Bereich 12a des Tankinnenraumes ebenfalls mit Reinigungswasser zu besprühen.

Zusätzlich oder alternativ kann der Rotor 16 auch durch einen (nicht gezeigten) elektrisch betriebenen Motor oder Pneumatikantrieb angetrieben werden, falls der Wasserdruck für einen Antrieb nicht ausreicht.

Der Rotor 16 kann im (nicht gezeigten) Transportzustand eingeklappt und aus dem Tankinnenraum weggeschwenkt sein. In der in Figur 2 gezeigten Reinigungsposition ist der Rotor 16 ausgeklappt und einsatzbereit.

Das Reinigungswasser lässt sich mittels Druckluft aus dem Vorratsbehälter 14 heraus in die Druckleitung 18 hineinfördern. Die im Zugfahrzeug 10a untergebrachte Druckluft-Erzeugungsanlage umfasst einen Druckluft-Kompressor 20 und weitere (nicht gezeigte) Komponenten, beispielsweise Druckluftbehälter und Ventilanordnungen. Über eine Druckluftleitung 36 wird die erzeugte Druckluft über ein pneumatisches Schaltventil 44, das in drei Schaltstellungen 1-2, 1-3 und 1-4 bringbar ist, in den doppelwandigen und druckdichten Vorratsbehälter 14 eingeleitet. Dabei ist das Schaltventil 44 in der Schaltstellung 1-2 auf Durchgang geschaltet.

Das Schaltventil kann außen am Auflieger 10b angebracht sein und einen (nicht gezeigten) Betätigungshebel zur manuellen Wahl der Schaltstellungen aufweisen. Alternativ kann das Schaltventil auch so ausgebildet sein, dass es elektrisch, beispielsweise von der Fahrerkabine aus, geschaltet werden kann.

Die in den Vorratsbehälter 14 eingeleitete Druckluft drückt das Reinigungswasser durch eine am Boden des Vorratsbehälters 14 angeordnete Auslassöffnung über das Rückschlagventil 42 in die Druckleitung 18. Durch den sich in der Druckleitung 18 aufbauenden Wasserdruck wird der Rotor 16 angetrieben und die Innenwandung des Silotanks 12 gleichmäßig benetzt, wobei Verschmutzungen aufgrund der Schwerkraft und Haftkraft des Wassers von der Innenwandung abgespült werden.

In einer (nicht gezeigten) alternativen Ausführungsform kann das Reinigungswasser auch durch eine elektrisch oder pneumatisch betätigte Pumpeinrichtung in die Druckleitung 18 gefördert werden.

An dem unteren Bereich 12b des Tanks 12 ist einen Ablauföffnung 46 und darunter ein Auffangtrichter 22 für das an der Innenwandung des Tanks 12 herabgelaufene, anfallende Schmutzwasser angeordnet. Der Auffangtrichter ist über eine Leitung 24 mit einem an dem Auflieger 10b angeordneten Sammelbehälter 26 verbunden.

Der Sammelbehälter 26 ist zusammen mit dem Reinigungswasser-Vorratsbehälter 14 als ein doppelwandiger, druckdichter Behälter mit zwei Kammern ausgebildet. Der Reinigungswasser-Vorratsbehälter 14 ist als eine Kammer und der Sammelbehälter 26 ist als die andere Kammer ausgebildet. In einer (nicht gezeigten) Ausführungsform kann der Behälter auch mehrere Kammern aufweisen, welche die Trennung unterschiedlicher Reinigungswasser erlaubt. Das Mehrkammerprinzip erleichtert auch eine thermische Isolierung des gesamten Behälters.

In der Leitung 24 ist eine Filtereinrichtung 28 angeordnet, die das bei der Reinigung anfallende Schmutzwasser über ein integriertes Filtersystem von festen Bestandteilen, wie z.B. groben Granulatteilen, reinigt. Im Filtersystem aufgefangene Feststoffe werden nach dem eigentlichen Reinigungsvorgang aus der Filtereinrichtung 28 entfernt.

An dem Reinigungswasser-Vorratsbehälter 14 ist eine Heizeinrichtung 30a zur Erwärmung des Reinigungswassers angeordnet. Mit der als indirekte Heizung ausgeführten Heizeinrichtung 30a lässt sich das Reinigungswasser mit erwärmter Druckluft extern beheizen. An dem Sammelbehälter 26 für das anfallende Schmutzwasser ist eine Heizeinrichtung 30b zur Erwärmung des Schmutzwassers angeordnet. Die Heizeinrichtungen werden nachfolgend näher beschrieben.

An dem Motor 33 des Zugfahrzeugs 10a ist ein erster Wärmetauscher 34 beispielsweise am Abgaskrümmer oder Turbolader angeordnet, der die Abwärme des Motors 33 aufnimmt. Der erste Wärmetauscher 34 wird über die Leitung 36 von Druckluft durchströmt, die von der Drucklufterzeugungsanlage 20 geliefert wird. Die Abwärme des Motors wird von dem ersten Wärmetauscher 34 an die Druckluft übertragen. Das Schaltventil 44 ist in der Schaltstellung 1-3 auf Durchgang geschaltet, so dass die erwärmte Druckluft in einen weiteren Wärmtauscher 30a, der an der Außenwand des Reinigungswasser-Vorratsbehälter 14 angeordnet ist, und noch einen weiteren Wärmtauscher 30b, der an der Außenwand des Sammelbehälter 26 angeordnet ist, eingeleitet wird. In den Wärmetauschern 30a und 30b wird der erwärmten Druckluft die Wärme entzogen und an das Reinigungswasser bzw. an das Schutzwasser abgegeben. Mit dieser Anordnung werden der Reinigungswasser-Vorratsbehälter 14 und der Sammelbehälter 26 mittels erwärmter Druckluft aufgeheizt. Die Aufheizung erfolgt dabei während der Motorlaufzeit des Zugfahrzeugs.

Die Heizeinrichtungen 30a und 30b weisen eine (nicht gezeigte) Temperaturbegrenzungsschaltung auf, die bei Erreichen einer vorgegebenen Wassertemperatur eine weitere Wärmezufuhr mittels Druckluft unterbricht. Hierzu können im Reinigungswasser-Vorratsbehälter 14 und im Sammelbehälter 26 Temperaturfühler vorgesehen sein, die bei Erreichen einer vorgegebenen Wassertemperatur ein elektrisches Signal abgeben. Dieses Signal kann entweder dem Fahrer angezeigt werden, damit dieser das Schaltventil 44 manuell betätigt. Alternativ kann das elektrische Signal auch direkt zur Umschaltung des elektrisch ansteuerbar ausgeführten Schaltventils 44 verwendet werden.

Zwischen dem ersten Wärmetauscher 34 und der Verteilungseinrichtung 16 erstreckt sich eine Druckluftleitung, die sich aus den Leitungsabschnitten 36, 40 und 18 zusammensetzt. Über die Druckluftleitung 36 wird die erwärmte Druckluft zum Schaltventil 44 geleitet, das in der Schaltstellung 1-3 auf Durchgang geschaltet ist. Die erwärmte Druckluft wird nach dem Schaltventil 44 über das Rückschlagventil 48 und die Druckleitung 18 am oberen Ende 12a in den Innenraum des Tanks 12 geleitet, um den Tank 12 nach dem Reinigungsvorgang zu trocknen. Der Rotor 16 wird dabei zur Verteilung der Trocknungsluft verwendet und wird durch die erwärmte Druckluft angetrieben. Durch die doppelte Nutzung des Leitungszweiges 18 mit Reinigungswasser und anschließender Trocknungsluft kann ein Einfrieren der Druckleitung und Korrosion vermieden werden.

Die am Kreuzungspunkt T in die Leitung 18 einmündenden Leitungen sind jeweils mit Rückschlagventilen 42 und 48 ausgerüstet. Dabei verhindert das Rückschlagventil 42, dass erwärmte Druckluft in den Reinigungswasser-Vorratsbehälter 14 eindringt. Das Rückschlagventil 42 verhindert, dass Reinigungswasser in das Schaltventil 44 bzw. den Druckluftleitungszweig 40 eindringt.

Die Reinigung des Tanks 12 wird in folgenden Schritten durchgeführt: Der Tank 12 wird von der im Wesentlichen waagrechten Transportstellung in eine dazu geneigte, im Wesentlichen senkrechte Reinigungsstellung gebracht. Zumindest am oberen Ende 12a des Tanks 12 wird die Innenwandung des Tanks 12 mit Reinigungswasser benetzt. Das Reinigungswasser läuft unter Schwerkrafteinfluss an der Innenwandung des Tanks 12 herab, wobei Verschmutzungen von der Innenwandung abgespült werden. Das anfallende Schmutzwasser wird an dem in Reinigungsstellung unteren Ende 12b des Tanks 12 aus diesem ausgespült.

Die druckluftbetriebene Heizung erfolg dabei folgendermaßen: Druckluft wird durch die Druckluftanlage des Zugfahrzeugs 10a erzeugt. Die Abwärme des Motors 33 des Zugfahrzeugs 10a wird an die Druckluft übertragen und das Reinigungswasser wird vor dem Einbringen in den Tank 12 mit der erwärmten Druckluft erwärmt.

Die druckluftbetriebene Trocknung erfolgt dadurch, dass nach dem Ausspülen des Tanks 12 die erwärmte Druckluft zur Trocknung in den Tank 12 eingeblasen wird. Abschleißend wird die Reinigung dokumentiert und bestätigt. Hierzu kann vorgesehen sein, dass nach abgeschlossenem Reinigungs- und Trocknungsvorgang ein elektronisches Signal erzeugt wird, dass unter Angabe von Datum, Zeit und Dauer des Reinigungsvorgangs in einem internen Speicher eingetragen wird. Dieser Speicher kann zur Dokumentation ausgelesen bzw. der Speicherinhalt ausgedruckt werden. Das Fahrzeug ist nach dem Dokumentationsvorgang wieder einsatzbereit.

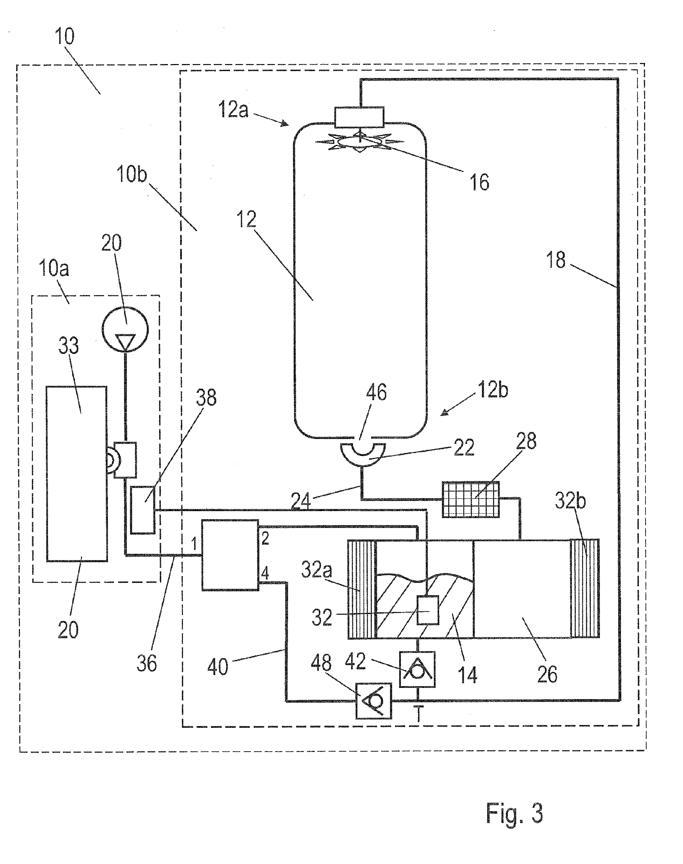

Die Figur 3 zeigt in schematischer Ansicht einen stark vereinfachten Schaltplan einer pneumatisch betriebenen und elektrisch beheizten Reinigungsvorrichtung.

In den Figuren 2 und 3 sind mit denselben Bezugszeichen dieselben oder ähnliche Komponenten bezeichnet. Die Ausführungsformen gemäß den Figuren 2 und 3 unterscheiden sich maßgeblich nur in der Art der Beheizung von Reinigungswasser-Vorratsbehälter 14 und Sammelbehälter 26, so dass nur diese Unterschiede im Folgenden beschrieben werden.

In dem Reinigungswasser-Vorratsbehälter 14 ist eine elektrisch betriebene Heizeinrichtung 32 angeordnet, die nach Art eines Tauchsieders das Reinigungswasser erwärmt. Zusätzlich ist ein Heizelement 32a an der Außenwand des Reinigungswasser-Vorratsbehälters 14 und noch ein weiteres Heizelement 32b an der Außenwand des Sammelbehälters 26 angeordnet. Die Heizeinrichtungen 32, 32a und 32b sind mit der Stromversorgung 38 des Zugfahrzeugs 10a bzw. mit dessen Generator verbunden. Beim elektrischen Aufheizen des Reinigungswassers erfolgt die Temperaturüberwachung über eine kombinierte Regel-Begrenzungsanlage. Mit dieser Anordnung werden der Reinigungswasser-Vorratsbehälter 14 und der Sammelbehälter 26 mittels elektrischer Energie aufgeheizt. Die Aufheizung erfolgt dabei während der Generatorlaufzeit des Zugfahrzeugs.

Die Förderung des Reinigungswassers erfolgt druckluftbetrieben. Die Trocknung erfolgt dadurch, dass nach dem Ausspülen des Tanks 12 die durch die Motorwärme erwärmte Druckluft zur Trocknung in den Tank 12 eingeblasen wird, wie dies bereits anhand der Figur 2 beschrieben wurde.

Die erwärmte Druckluft und erwärmtes Wasser führenden Leitungen, Ventile, Heizeinrichtungen und Wasser aufnehmenden Behälter sind thermisch isoliert.

In den Figuren sind nur die wesentlichen Komponenten der Reinigungsvorrichtung zeichnerisch sehr vereinfacht dargestellt. Es ist zu beachten, dass noch weitere, in Druckluftanlagen übliche Komponenten wie Ventileinrichtungen, Drosseln, Luftfilter, Druckluftbehälter oder dergleichen pneumatische Elemente für einen Betrieb notwendig sein können.

## Patentansprüche

1. Vorrichtung zur Reinigung eines an einem Transportfahrzeug (10; 10a, 10b) angebrachten Tanks (12), insbesondere eines mit einem granularen Transportgut befüllbaren Silotanks, wobei der Tank (12) von einer Transportstellung in eine dazu geneigte Reinigungsstellung bringbar ist,
**dadurch gekennzeichnet,**
**dass** an dem Transportfahrzeug (10; 10a, 10b) ein Vorratsbehälter (14) für Reinigungswasser angeordnet ist,
**dass** an dem in Reinigungsstellung oberen Bereich (12a) des Tanks (12) eine Einrichtung (16) zur Verteilung von Reinigungswasser an der Innenwandung des Tanks (12) angeordnet ist, wobei der Reinigungswasser-Vorratsbehälter (14) und die Verteilungseinrichtung (16) über eine Leitung (18) miteinander verbunden sind und zwischen dem Reinigungswasser-Vorratsbehälter (14) und der Verteilungseinrichtung (16) eine Fördereinrichtung (20) wirksam ist, mit der das Reinigungswasser zur Verteilungseinrichtung (16) gefördert wird; und
**dass** an dem in Reinigungsstellung unteren Bereich (12b) des Tanks (12) eine Auffangeinrichtung (22) für das anfallende Schmutzwasser angeordnet ist.

2. Reinigungsvorrichtung nach Anspruch 1,
**dadurch gekennzeichnet,**
**dass** die Auffangeinrichtung (22) über eine Leitung (24) mit einem an dem Transportfahrzeug (10; 10a, 10b) angeordneten Sammelbehälter (26) verbunden ist, wobei in der Leitung (24) eine Filtereinrichtung (28) zur Reinigung des anfallenden Schmutzwassers von Granulatteilen angeordnet ist.

3. Reinigungsvorrichtung nach Anspruch 1 oder 2,
**dadurch gekennzeichnet,**
**dass** zumindest an dem Reinigungswasser-Vorratsbehälter (14) eine Heizeinrichtung (30a, 32) zur Erwärmung des Reinigungswassers angeordnet ist.

4. Reinigungsvorrichtung nach Anspruch 2 oder 3,
**dadurch gekennzeichnet,**
**dass** an dem Sammelbehälter (26) für das anfallende Schmutzwasser eine Heizeinrichtung (30b) zur Erwärmung des Schmutzwassers angeordnet ist.

5. Reinigungsvorrichtung nach einem der Ansprüche 1 bis 4,
**dadurch gekennzeichnet,**
**dass** an dem Motor 33 des Transportfahrzeugs (10; 10a, 10b) ein erster Wärmetauscher (34) zur Übertragung der Motorwärme an von der Druckluftanlage (20) des Transportfahrzeugs (10; 10a, 10b) erzeugte Druckluft angeordnet ist.

6. Reinigungsvorrichtung nach Anspruch 5,
**dadurch gekennzeichnet,**
**dass** zwischen dem ersten Wärmetauscher (34) und der Heizeinrichtung eine Druckluftleitung (36) angeordnet ist, über welche die erwärmte Druckluft zu einem an der Heizeinrichtung angeordneten weiteren Wärmetauscher (30a, 30b) zur Übertragung der Wärme der Druckluft an das Reinigungswasser und/oder Schutzwasser transportiert wird.

7. Reinigungsvorrichtung nach einem der Ansprüche 4 bis 6,
**dadurch gekennzeichnet,**
**dass** die Heizeinrichtung (32) elektrisch betreibbar und mit der Stromversorgung (38) des Transportfahrzeugs (10; 10a, 10b) verbunden ist.

8. Reinigungsvorrichtung nach einem der Ansprüche 4 bis 7,
**dadurch gekennzeichnet,**
**dass** die Heizeinrichtung (30a, 30b, 32) eine Temperaturbegrenzungsschaltung aufweist, die bei Erreichen einer vorgegebenen Wassertemperatur eine weitere Wärmezufuhr unterbricht.

9. Reinigungsvorrichtung nach einem der Ansprüche 1 bis 8,
**dadurch gekennzeichnet,**
**dass** die Fördereinrichtung (20) druckluftbetrieben ist.

10. Reinigungsvorrichtung nach einem der Ansprüche 5 bis 9,
**dadurch gekennzeichnet,**
**dass** zwischen dem ersten Wärmetauscher (34) und der Verteilungseinrichtung (16) eine Druckluftleitung (36, 40, 18) angeordnet ist, über welche die erwärmte Druckluft zur Trocknung in den Innenraum des Tanks (12) geleitet wird.

11. Verfahren zur Reinigung eines an einem Transportfahrzeug (10; 10a, 10b) angebrachten Tanks (12), insbesondere eines mit einem granularen Transportgut befüllbaren Silotanks, wobei der Tank (12) von einer Transportstellung in eine dazu geneigte Reinigungsstellung gebracht wird,
**dadurch gekennzeichnet,**
**dass** zumindest am oberen Bereich (12a) des Tanks (12) die Innenwandung des Tanks (12) mit Reinigungswasser benetzt wird;
**dass** das Reinigungswasser an der Innenwandung des Tanks (12) herabläuft, wobei Verschmutzungen von der Innenwandung abgespült werden, und
**dass** das anfallende Schmutzwasser an dem in Reinigungsstellung unteren Bereich (12b) des Tanks (12) aus diesem ausgespült wird.

12. Reinigungsverfahren nach Anspruch 11,
**dadurch gekennzeichnet,**
**dass** Druckluft durch die Druckluftanlage des Transportfahrzeugs (10; 10a, 10b) erzeugt wird,
**dass** die Wärme des Motors des Transportfahrzeugs (10; 10a, 10b) an die Druckluft übertragen wird, und
**dass** das Reinigungswasser vor dem Einbringen in den Tank (12) mit der erwärmten Druckluft erwärmt wird.

13. Reinigungsverfahren nach Anspruch 11 oder 12,
**dadurch gekennzeichnet,**
**dass** Druckluft durch die Druckluftanlage des Transportfahrzeugs (10; 10a, 10b) erzeugt wird,
**dass** die Wärme des Motors des Transportfahrzeugs (10; 10a, 10b) an die Druckluft übertragen wird, und
**dass** nach dem Ausspülen des Tanks (12) die erwärmte Druckluft zur Trocknung in den Tank (12) eingeblasen wird.
